# FASCICULE DE BREVET EUROPEEN

(11) **EP 0 871 028 B1**
(45) Date de publication et mention de la délivrance du brevet: **01.08.2007**
(21) Numéro de dépôt: 98420062.6
(22) Date de dépôt: 10.04.1998
(51) Int. Cl.: G01N 21/90

(54) **Procédé et dispositif pour détecter des corps étrangers à l'intérieur d'un récipient translucide ou transparent**
Verfahren und Vorrichtung zur Detektion von Fremdkörpern im Innern durchscheinender oder durchsichtiger Behälter
Method and apparatus for detecting foreign bodies inside a translucent or transparent container

(30) Priorité: 11.04.1997 FR 9704720
(43) Date de publication de la demande: 14.10.1998
(73) Titulaire: Tiama, 69700 Montagny (FR)
(72) Inventeur: Venaille, Christophe, 69230 St Genis Laval (FR); Mermet, Eric, 71130 Gueugnon (FR)
(74) Mandataire: Thibault, Jean-Marc

(56) Documents cités:
- EP-A- 0 704 696
- EP-A- 0 797 092
- WO-A-96/18883
- FR-A- 2 726 651
- FR-A- 2 746 502
- US-A- 4 209 802

## Description

La présente invention concerne le domaine technique de l'inspection d'objets ou d'articles creux translucides ou transparents contenant un liquide également de nature transparente ou translucide.

L'objet de l'invention vise plus précisément l'inspection de tels récipients en vue de déceler à l'intérieur, la présence de corps étrangers au sens général, de densité supérieure à celle du liquide.

L'objet de l'invention trouve une application particulièrement avantageuse pour la détection des débris de verre susceptibles d'être présents à l'intérieur de récipients tels que des bouteilles réalisées en verre.

Dans le domaine préféré d'application ci-dessus, il apparaît le besoin d'inspecter les bouteilles, afin de rechercher la présence éventuelle de débris de verre. Dans l'état de la technique, il a été proposé par le document WO 96/18883, un procédé de détection dans lequel la bouteille est retournée, de manière à mettre en mouvement le débris à l'intérieur du liquide. Des images sont prises successivement dans un faible intervalle de temps permettant, par différence, d'observer le déplacement des débris. L'inconvénient majeur de cette technique réside dans le fait qu'il convient de surveiller la zone de prise d'images pendant un intervalle de temps relativement important pour tenir compte de la chute d'un débris pouvant varier de quelques centièmes de seconde à quelques secondes, selon le type de récipient et du liquide. Une telle sujétion impose soit des cadences de travail très lentes, soit une prise d'images multiples et un nombre important de caméras. Par ailleurs, la technique utilisée repose sur une différence d'images qui peut s'avérer très sensible aux bruits liés à des conditions industrielles réelles, telles que des bulles dans le liquide ou des gouttes sur la paroi de la bouteille.

Il est connu, par ailleurs, par la demande de brevet FR 2 725 274, un dispositif mécanique qui impose à la bouteille une séquence de mouvement permettant de placer les corps étrangers dans une zone stable et sans gravure, à savoir l'épaule de la bouteille. Une telle solution s'avère délicate à mettre en oeuvre pour des bouteilles présentant une épaule peu marquée. Par ailleurs, la force centrifuge appliquée aux corps étrangers les empêche de rester dans une zone stable d'observation. Il s'avère également que le temps de placement du corps étranger dans cette zone rend ce procédé inutilisable pour des hautes cadences de contrôle.

Dans le même ordre d'idée, le brevet US-A-4 209 802 a proposé d'incliner le récipient par rapport à la verticale d'un angle de l'ordre de 45°, afin d'assurer le confinement des corps étrangers dans une zone d'inspection faisant partie du fond du récipient. La zone d'inspection du récipient est éclairée et la lumière transmise par le récipient est récupérée par une caméra dont le signal vidéo délivré est analysé afin de déterminer la présence ou non d'un corps étranger. Une telle technique permet de confiner les éventuels corps étrangers dans une zone limitée par rapport à la taille du récipient. Toutefois, il doit être considéré que cette zone de confinement correspond à une partie de la bouteille comportant de nombreuses gravures ou marques, telles que des crans, des perles de code ou des joints de moule. Dans ces conditions, la technique proposée par ce brevet ne permet pas de distinguer de manière fiable, les corps étrangers situés au fond de la bouteille et les divers marquages réalisés sur le récipient.

L'objet de l'invention vise à remédier aux inconvénients énoncés ci-dessus en proposant un procédé permettant de détecter de manière sûre et fiable, la présence de corps étrangers à l'intérieur d'un récipient, avec une cadence d'inspection élevée, tout en éliminant le rejet de bonnes bouteilles considérées comme défectueuses en raison de la présence des nombreux marquages sur les récipients.

Le procédé selon l'invention est conforme à la revendication 1.

Un autre objet de l'invention est d'offrir un dispositif permettant de détecter de manière sûre la présence d'un corps étranger de densité supérieure à celle du liquide contenu dans le récipient.

Le dispositif de détection est conforme à la revendication 10.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est un schéma explicitant un exemple de réalisation d'un dispositif de détection conforme à l'invention.

La **fig. 2** est une vue à plus grande échelle montrant un détail caractéristique du dispositif de détection conforme à l'invention.

La **fig. 3** est une vue d'un exemple d'image explicitant le procédé de détection conforme à l'invention.

La **fig. 4** est une vue d'une image montrant une autre caractéristique du procédé de détection conforme à l'invention.

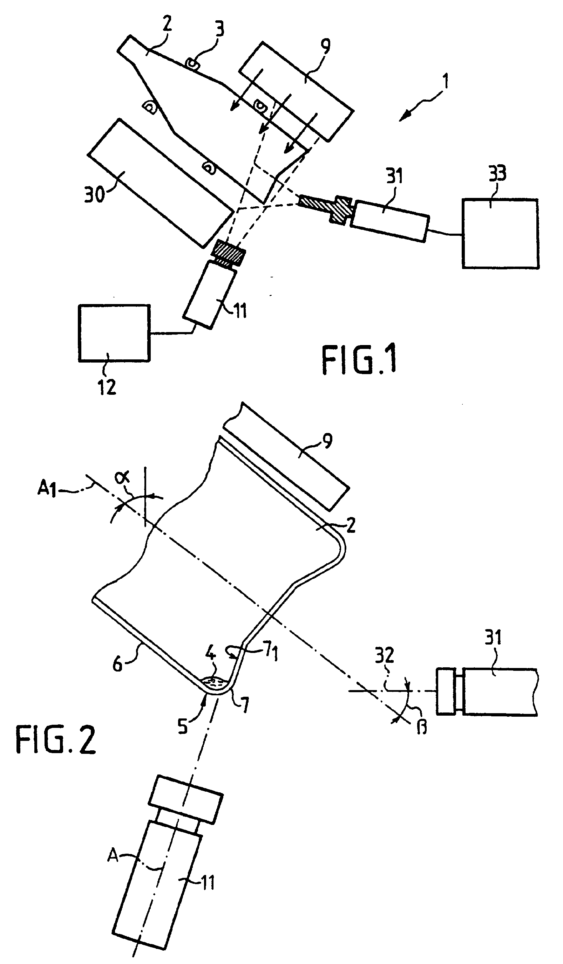

Tel que cela apparaît à la **fig. 1**, le dispositif **1** selon l'invention est conçu pour permettre le contrôle d'articles creux ou de récipients **2** réalisés en un matériau transparent ou translucide, tel que du verre. Dans l'exemple préféré décrit ci-dessous, les récipients contrôlés sont des bouteilles **2** réalisées en verre, mais il doit être considéré que l'invention s'étend à tout conditionnement pour un liquide présentant comme le matériau constitutif du conditionnement, une nature transparente ou translucide. Le dispositif **1** selon l'invention est conçu pour détecter à l'intérieur du récipient, la présence d'un corps étranger, au sens général, de densité supérieure à celle du liquide. L'objet de l'invention trouve une application particulièrement avantageuse pour déceler, en tant que corps étranger, un débris de verre, mais il doit être considéré que l'objet de l'invention permet de détecter tout type de corps étranger au liquide, de densité supérieure à celle du liquide.

De manière préférée, le dispositif de détection **1** selon l'invention est placé sur la chaîne de convoyage des bouteilles **2**, à un poste de contrôle situé en aval du poste d'embouteillage. Conformément à l'invention, le dispositif **1** selon l'invention contrôle les bouteilles **2** lorsqu'elles occupent une position inclinée. A cet égard, le dispositif **1** comporte des moyens de manipulation **3** permettant d'incliner chaque bouteille **2** d'un angle α formé entre la verticale et l'axe de symétrie longitudinale **A₁** de la bouteille. L'angle α est compris entre 30 et 70° et, de préférence, est de l'ordre de 45°. Les moyens de positionnement **3** sont réalisés par tout dispositif mécanique permettant d'assurer sur la ligne de convoyage, le passage des bouteilles **2** de la position verticale, à une position inclinée lorsqu'elles défilent devant le dispositif de détection **1**. Puis, en aval du poste de détection, les bouteilles **2** sont replacées en position verticale. Tel que cela ressort plus précisément de la **fig. 2**, l'inclinaison de la bouteille **2** conduit les éventuels corps étrangers **4** à migrer vers le fond de la bouteille pour s'établir dans une zone d'inspection ou de confinement **5** située à la jonction du corps **6** et du talon **7** de la bouteille, appelée également jable. La zone de confinement **5** s'étend ainsi sur une partie du jable **6** de la bouteille, située au niveau le plus bas. Il doit être considéré qu'un angle α proche de 30° favorise la chute rapide des débris au fond de la bouteille, tandis qu'un angle proche de 70° favorise le placage de la plus grande surface des débris contre la paroi latérale du jable **6** de la bouteille. Il doit être compris que la bouteille **2** est inclinée de manière qu'à l'expiration du délai maximal de migration des corps étrangers **4**, la bouteille se trouve être placée en position pour être contrôlée par le dispositif de détection **1**.

L'inclinaison de la bouteille **2** permet de placer les corps étrangers **4** dans une zone stable qui est le jable de la bouteille. La scrutation de la zone de confinement **5** est suffisante pour détecter la présence éventuelle de corps étrangers qui, sous l'effet de la pesanteur, sont conduits inévitablement vers le fond de la bouteille. Il est à noter que la zone de confinement **5** est limitée par rapport à la taille de la bouteille.

Conformément à l'invention, le dispositif de détection **1** comporte une première source lumineuse **9** et une première caméra vidéo **11** permettant d'observer au moins la zone de confinement **5**. La source d'éclairage **9** est par exemple, une source de forme carrée d'environ 60 à 80 mm de côté et peut être indifféremment constituée de tubes néon ou fluorescents émettant en permanence une lumière blanche haute fréquence, d'un pavé de diodes électro-luminescentes de couleur ou d'une lampe à courant continu de type ampoule halogène. Tel que cela ressort des **fig. 1** et **2**, la source lumineuse **9** est placée le long du corps **6** de la bouteille, du côté opposé à la zone de confinement **5**.

La caméra **11** est disposée au dessous du fond **7** de la bouteille, de manière que son axe de visée **A** soit sensiblement tangent à la paroi interne **7₁** du fond **7** du récipient. Il doit, bien entendu, être considéré que la paroi interne **7₁** est celle prolongeant la partie inspectée du jable, à savoir celle prolongeant la zone de confinement **5**. En effet, il est à noter que le fond des récipients à contrôler peut être de divers types, tels que plat, bombé, piqué ou semi-piqué. La caméra **11** est donc placée de façon à exclure de son champ de visée, le fond **7** de la bouteille. Un tel positionnement de la caméra **11** permet de récupérer par transmission, la lumière transmise par la bouteille **2** et provenant de la source lumineuse **9**.

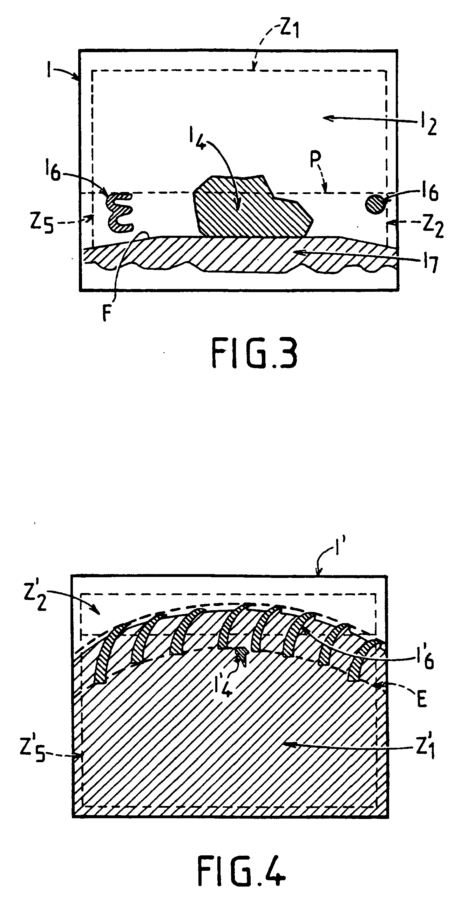

La caméra **11** est une caméra électronique standard, à savoir une caméra matricielle à haute fréquence d'acquisition, reliée à une unité **12** d'analyse et de traitement du signal vidéo transmis par la caméra. De manière classique, cette unité d'analyse et de traitement **12** comporte un circuit d'acquisition des signaux électroniques délivrés par la caméra et représentatifs de l'intensité lumineuse reçue par chacune des cellules photosensibles de la caméra et correspondant à des images. Le circuit d'acquisition assure la conversion du signal analogique en un signal numérique codé sur un certain nombre de bits suivant une échelle de gris déterminée. Le circuit d'acquisition est piloté par l'intermédiaire d'une unité de commande reliée à un système de détection de la présence d'une bouteille permettant de synchroniser la prise d'une image lors du passage des bouteilles **2** devant la caméra **11**. Ainsi, tel que cela ressort plus précisément de la **fig. 3**, pour chaque passage d'une bouteille, la caméra **11** délivre un signal vidéo correspondant à une image **I** qui est analysée par l'unité de traitement **12** de façon à détecter la présence d'une zone grise ou sombre **I₄** correspondant à un corps étranger **4**. En effet, compte tenu du fait que la caméra **11** récupère la lumière transmise par transmission par la bouteille **2**, les corps étrangers **4** apparaissent comme une zone grise **I₄**, tandis que le liquide et les parois de la bouteille **2** apparaissent comme une zone claire **I₂** sur l'image. Il est à noter que le fond **7** apparaît sur l'image comme une zone sombre **I₇**, tandis que les autres marquages ou gravures apparaissent également comme des zones sombres **I₆**.

Conformément à l'invention, l'unité de traitement et d'analyse **12** comporte des moyens permettant de mettre en évidence la présence d'un corps étranger **4**. De tels moyens, qui font partie d'un système informatique, permettent de mettre en oeuvre une méthode ou un procédé de détection dont le déroulement est le suivant.

Le procédé consiste à analyser l'image **I** formée par le signal vidéo en définissant sur l'image, une fenêtre de scrutation **Z₅** correspondant au moins à la zone de confinement **5** des déchets. Le procédé consiste à définir une ligne de séparation **P** délimitant d'un côté une première zone d'inspection **Z₁** et de l'autre côté une deuxième zone d'inspection **Z₂** dans laquelle sont situés les éventuels marquages ou motifs portés par le récipient. Dans l'exemple illustré, la deuxième zone **Z₂** comporte, en tant que marquages, une gravure et une perle de code apparaissant sous la forme de zones sombres **I₆**. Le procédé consiste à rechercher dans la première zone d'inspection **Z₁**, une zone sombre correspondant inévitablement à la présence d'un corps étranger. Dans l'exemple illustré, la partie de la zone sombre **I₄**, située au-dessus de la ligne **P**, est détectée. De préférence, la surface et/ou la forme de la zone sombre **I₄** détectée est comparée à une valeur de seuil au-delà de laquelle la zone sombre est considérée comme correspondant à la présence d'un corps étranger. Dans ce cas, la bouteille **2** est considérée comme incluant un corps étranger.

En cas d'absence d'une zone sombre dans la première zone **Z₁,** il est recherché dans la deuxième zone d'inspection **Z₂,** la présence d'une zone sombre correspondant à un corps étranger. A cet égard, le procédé consiste à déterminer sur l'image **I**, le profil **F** du fond du récipient, à savoir de la zone sombre **I₇** s'établissant en bas de l'image sur toute sa largeur. Le procédé consiste à déterminer si la zone sombre **I₄** détectée touche ou non le profil **F** du fond, afin de savoir si elle correspond respectivement à un corps étranger ou à un motif. En effet, la zone sombre **I₄** est considérée comme correspondant à un corps étranger **4** si elle touche ou est contiguë au profil **F** du fond de la bouteille, dans la mesure où le corps étranger est situé au fond de la bouteille. Il est à noter que dans la deuxième zone **Z₂**, le procédé consiste également à déterminer la surface et/ou la forme de la zone sombre et à la comparer à une valeur de seuil au-delà de laquelle la zone sombre est considérée comme correspondant à un corps étranger.

Le dispositif de l'invention décrit ci-dessus permet l'acquisition d'images avec un éclairage en transmission et la détermination de manière fiable, de la présence d'un corps étranger. En effet, les corps étrangers sont confinés systématiquement dans une zone de scrutation dont l'image prise est analysée pour distinguer les corps étrangers des marquages portés par les bouteilles. Pour compléter la détection, le dispositif **1** selon l'invention peut comporter un deuxième équipement de détection incluant une source lumineuse et une caméra, du même type que celui précédemment décrit, mais présentant un champ de détection plus réduit. Selon une caractéristique préférée de réalisation, le dispositif de détection **1** comporte un deuxième équipement de détection constitué par une deuxième source lumineuse **30** éclairant au moins la zone d'inspection **5** et par une deuxième caméra **31** adaptée pour récupérer la lumière transmise par réflexion par la bouteille **2** et issue de la deuxième source lumineuse **30**. La deuxième caméra **31** est placée en dessous du fond **7** de la bouteille, de manière que son axe de visée **32** soit dirigé vers la zone de confinement **5** et forme avec l'axe de symétrie **A₁** de la bouteille, un angle d'inclinaison *β* compris entre 0 et 80° et, de préférence, de l'ordre de 30°. La deuxième source lumineuse **31** est de type identique ou non à la première source et se trouve placée le long de la paroi de la bouteille prolongeant la zone de confinement, c'est-à-dire diamètralement opposée à la première source **9**. Il convient de considérer que la source lumineuse **30** permet d'éclairer au moins la zone d'inspection **5** du récipient permettant à la caméra **31** de récupérer la lumière transmise par réflexion par la bouteille **2**.

La caméra **31** est reliée à un circuit **33** de traitement permettant d'analyser le niveau de gris du signal vidéo délivré par la caméra, du type également CCD. Pour chaque passage d'une bouteille devant le poste de détection, la deuxième caméra **31** prend une image **I'** dont le circuit de traitement analyse le niveau de gris, de manière à détecter la présence d'une zone claire correspondant à un corps étranger. En effet, il doit être considéré que l'image **I'** obtenue avec un éclairage en réflexion conduit à l'obtention d'un fond noir sur lequel les corps étrangers apparaissent comme des zones brillantes ou claires.

Le circuit de traitement **33** comporte des moyens permettant d'analyser les images **I'** formées, afin de détecter la présence d'une zone claire correspondant à un corps étranger. Tel que cela ressort de la **fig. 4**, le procédé d'analyse consiste à définir sur l'image **I'** une fenêtre de scrutation **Z'₅** correspondant au moins à la zone de confinement **5** des corps étrangers. Le procédé consiste à définir un contour **E** qui suit le profil interne du plan de pose de la bouteille. Dans l'exemple illustré, le contour **E** est une ellipse, dans la mesure où la bouteille considérée possède une section droite transversale circulaire. Le contour **E** délimite, d'un côté, une première zone de scrutation **Z'₁** et de l'autre côté, une deuxième zone de scrutation **Z'₂** incluant les motifs du plan de pose du récipient. Dans l'exemple illustré, les motifs du plan de pose, qui sont constitués par des crans, apparaissent sous la forme d'une succession de zones claires **I'₆**. Il est procédé, dans la première zone **Z'₁**, à la recherche d'une zone claire correspondant à la présence d'un corps étranger. Dans l'exemple illustré, le corps étranger **4** apparaît sous la forme d'une zone claire **I'₄**. Il est ensuite déterminé la surface et/ou la forme de la zone claire **I'₄** détectée, de manière à la comparer à une valeur de seuil dite de défaut, au-delà de laquelle la zone claire est considérée comme correspondant à un corps étranger. La bouteille est alors considérée comme défectueuse.

En cas d'absence d'une zone claire dans la première zone **Z'₁**, il est recherché dans la deuxième zone de scrutation **Z'₂** la présence d'une zone claire correspondant à un corps étranger. A cet effet, il est prévu de rechercher dans cette deuxième zone de scrutation, les zones claires **I'₆** correspondant aux motifs du plan de pose et à détecter une zone claire autre que celle correspondant à ces motifs et à les comparer à des valeurs de seuil d'épaisseur radiale et de surface, au-delà desquelles la zone claire est considérée comme correspondant à un corps étranger.

L'invention n'est pas limitée aux exemples décrits et représentés, car diverses modifications peuvent y être apportées sans sortir de son cadre.

## Revendications

1. - Procédé pour détecter, à l'intérieur d'un récipient (2) transparent ou translucide contenant un liquide également transparent ou translucide, la présence d'un corps étranger (4) de densité supérieure à celle du liquide, le procédé consistant :
- à incliner le récipient (2) par rapport à la verticale d'un angle (α), afin d'assurer le confinement du corps étranger dans une zone d'inspection (5) faisant partie du jable du récipient,
- à éclairer au moins la zone d'inspection du récipient à l'aide d'au moins une source lumineuse (9),
- à récupérer par une première caméra (11), la lumière transmise par le récipient,
- et à analyser le signal vidéo délivré par la caméra afin de déterminer la présence ou non d'un corps étranger,
**caractérisé en ce qu'**il consiste:
- à récupérer la lumière transmise par transmission par le récipient et provenant de la source lumineuse (9), par la caméra (11) dont l'axe de visée (A) est tangent à la paroi interne (7₁) du fond (7) du récipient, prolongeant la zone d'inspection (5) du jable,
- et à analyser au moins le niveau de gris du signal vidéo de manière à détecter la présence d'une zone sombre (14) correspondant à un corps étranger.

2. - Procédé selon la revendication 1, **caractérisé en ce qu'**il consiste à analyser l'image formée par le signal vidéo :
- en définissant sur l'image, une ligne de séparation (**P**) délimitant d'un côté une première zone d'inspection (**Z₁**) et, de l'autre côté, une deuxième zone d'inspection (**Z₂**) dans laquelle apparaissent les éventuels marquages portés par le jable du récipient,
- en recherchant dans la première zone d'inspection (**Z₁**), une zone sombre (**I₄**) correspondant à un corps étranger,
- et en recherchant dans la deuxième zone d'inspection (**Z₂**), en cas d'absence d'une zone sombre dans la première zone, la présence d'une zone sombre correspondant à un corps étranger.

3. - Procédé selon la revendication 2, **caractérisé en ce qu'**il consiste pour la recherche dans la deuxième zone d'inspection (**Z₂**),
- à déterminer sur l'image le profil (**F**) du fond du récipient,
- et à déterminer si la zone sombre détectée (**I₄**) touche ou non le profil du fond, afin de reconnaître la présence respectivement d'un corps étranger ou d'un marquage.

4. - Procédé selon la revendication 2 ou 3, **caractérisé en ce qu'**il consiste à déterminer la surface et/ou la forme de la zone sombre (**I₄**) et à la comparer à une valeur de seuil au-delà de laquelle la zone sombre (**I₄**) est considérée comme correspondant à un corps étranger.

5. - Procédé selon l'une des revendications 1 à 4, **caractérisé en ce qu'**il consiste :
- à éclairer au moins la zone d'inspection (**5**) du récipient pour permettre à une deuxième caméra (**31**) de récupérer la lumière transmise par réflexion par le récipient,
- et à analyser au moins le niveau de gris du signal vidéo délivré par la deuxième caméra (**31**), de manière à détecter la présence d'une zone claire (**I'₄**) correspondant à un corps étranger.

6. - Procédé selon la revendication 5, **caractérisé en ce qu'**il consiste à placer la deuxième caméra (**31**) en dessous du fond (**7**) du récipient, de manière que son axe de visée (32) forme avec l'axe de symétrie (**A₁**) du récipient un angle d'inclinaison (*β*) compris entre 0 et 80° et, de préférence, de l'ordre de 30°.

7. - Procédé selon la revendication 5, **caractérisé en ce qu'**il consiste à analyser l'image formée par le signal vidéo délivré par la deuxième caméra (**31**) :
- en définissant sur l'image, un contour (**E**) qui suit le profil interne du plan de pose du récipient et délimite, d'un côté, une première zone de scrutation (**Z'₁**) et, de l'autre côté, une deuxième zone de scrutation (**Z'₂**) dans laquelle apparaissent les marquages du plan de pose du récipient,
- et en recherchant dans la deuxième zone de scrutation (**Z'₂**), en cas d'absence d'une zone claire dans la première zone, la présence d'une zone claire correspondant à un corps étranger.

8. - Procédé selon la revendication 7, **caractérisé en ce qu'**il consiste à déterminer la surface et/ou la forme de la zone claire détectée (**I'₄**) et à la comparer à une valeur de seuil, au-delà de laquelle la zone claire est considérée comme correspondant à un corps étranger.

9. - Procédé selon la revendication 7, **caractérisé en ce qu'**il consiste, pour la recherche dans la deuxième zone de scrutation (**Z'₂**) :
- à repérer les zones claires (**I'₆**) orrespondant aux motifs du plan de pose,
- et à détecter une zone claire (**I'₄**) autre que celles (**I'₆**) correspondant aux motifs du plan de pose et à les comparer à des valeurs de seuil d'épaisseur radiale et de surface au-delà desquelles la zone claire est considérée comme correspondant à un corps étranger.

10. - Dispositif pour détecter à l'intérieur d'un récipient (2) transparent ou translucide contenant un liquide également transparent ou translucide, la présence d'un corps étranger (4) de densité supérieure à celle du liquide, le dispositif (1) comportant :
- des moyens (3) pour incliner le récipient par rapport à la verticale, d'un angle (α), afin d'assurer le confinement du corps étranger dans une zone d'inspection (5) faisant partie du jable du récipient,
- au moins une première source lumineuse (9) éclairant au moins la zone d'inspection (5),
- au moins une première caméra vidéo (11) destinée à récupérer la lumière transmise par le récipient,
- et une unité de traitement et d'analyse (12) du signal vidéo délivré par la caméra, afin de déterminer la présence ou non d'un corps étranger,
**caractérisé en ce que**:
- la première source lumineuse (9) est placée le long du corps (6) de la bouteille, du côté opposé à la zone de confinement,
- la première caméra (11) disposée en dessous du fond du récipient et dont l'axe de visée (A) est tangent à la paroi interne (7₁) du fond (7) du récipient prolongeant la zone d'inspection (5) du jable, de manière à récupérer la lumière transmise par transmission par le récipient,
- et une unité de traitement (12) est reliée à la caméra (11), pour analyser le niveau de gris du signal vidéo, de façon à détecter la présence d'une zone sombre correspondant à un corps étranger.

11. - Dispositif selon la revendication 10, **caractérisé en ce que** l'unité de traitement (12) comporte :
- des moyens pour définir sur l'image formée par le signal vidéo, une ligne de séparation (**P**) délimitant d'un côté, une première zone d'inspection (**Z₁**) et, de l'autre côté, une deuxième zone d'inspection (**Z₂**) dans laquelle apparaissent les éventuels marquages portés par le jable du récipient,
- et des moyens pour rechercher une zone sombre (**I₄**) correspondant à un corps étranger et, en l'absence de zone sombre dans la première zone d'inspection, à poursuivre la recherche dans la deuxième zone d'inspection.

12. - Dispositif selon la revendication 10, **caractérisé en ce qu'**il comporte :
- une deuxième source lumineuse (**30**) éclairant au moins la zone d'inspection,
- une deuxième caméra (**31**) adaptée pour récupérer la lumière transmise par réflexion par le récipient et issue de la deuxième source lumineuse,
- et un circuit de traitement (**33**) relié à la deuxième caméra, afin d'analyser le niveau de gris du signal vidéo, de façon à détecter la présence d'une zone claire (**I'₄**) correspondant à un corps étranger.

13. - Dispositif selon la revendication 12, **caractérisé en ce que** la deuxième caméra (**31**) est placée en dessous du fond du récipient, de manière que son axe de visée (**32**) forme avec l'axe de symétrie (**A₁**) du récipient un angle d'inclinaison (*β*) compris entre 0 et 80° et, de préférence, de l'ordre de 30°.

14. - Dispositif selon la revendication 12, **caractérisé en ce que** le circuit de traitement (**33**) comporte :
- des moyens pour définir sur l'image formée par le signal vidéo, un contour (**E**) suivant le profil interne du plan de pose du récipient et délimitant d'un côté, une première zone de scrutation (**Z'₁**) et, de l'autre côté, une deuxième zone de scrutation (**Z'₂**) incluant les zones claires correspondant aux motifs (**I'₆**) du plan de pose du récipient,
- et des moyens de recherche d'une zone claire (**I'₆**) d'abord dans la première zone de scrutation et, en l'absence de zone claire détectée, dans la deuxième zone de scrutation.

## Claims

1. A method for the detection, within a transparent or translucent receptacle (2) containing a liquid that is also transparent or translucent, the presence of a foreign body (4) of greater density than that of the liquid, the method consisting:
- to angle the receptacle (2) in relation to the vertical by an angle (α), in order to ensure the retention of the foreign body in an inspection area (5) forming part of the concave bottom moulding of the receptacle,
- to illuminate at least the inspection area of the receptacle by means of at least one light source (9),
- to recover, in a first camera (11), the light transmitted by the receptacle,
- and to analyse the video signal delivered by the camera in order to determine the presence or not of a foreign body,
**characterised in that** it consists:
- to recover the light transmitted, after transmission by the receptacle and that has originated in the light source (9), by means of the camera (11) whose viewing axis (A) is tangential to the internal wall (7₁) of the bottom (7) of the receptacle, prolonging the inspection area (5) of the concave bottom moulding,
- and to analyse at least the grey level of the video signal so as to detect the presence of a dark area (14) corresponding to a foreign body.

2. The method according to claim 1, **characterised in that** it consists of analysing the image formed by the video signal
- by determining, on the image, a line of separation (P) delimiting, on one side, a first inspection area (Z₁) and, on the other side, a second inspection area (Z₂), in which appear any markings borne by the concave bottom moulding of the receptacle,
- by seeking, in the first inspection area (Z₁), a dark area (I₄) corresponding to a foreign body,
- and by seeking, in the second inspection area (Z₂), in the event of absence of a dark area in the first zone, the presence of a dark area corresponding to a foreign body.

3. The method according to claim 2, **characterised in that** it consists, for the search in the second inspection area (Z₂), of:
- determining, on the image, the profile (F) of the bottom of the receptacle,
- and determining whether the dark area detected (I₄) touches the profile of the bottom or not, in order to recognise the presence of a foreign body or of a marking respectively.

4. The method according to claim 2 or 3, **characterised in that** it consists of determining the area and/or the shape of the dark area (I₄), and of comparing this with a threshold value above which the dark area (I₄) is considered to be a foreign body.

5. A method according to one of claims 1 to 4, **characterised in that** it consists:
- to illuminate at least the inspection area (5) of the receptacle, in order to allow a second camera (31) to recover the light transmitted, by reflection, by the receptacle,
- and to analyse at least the grey level of the video signal delivered by the second camera (31), so as to detect the presence of a light area (I'₄) corresponding to a foreign body.

6. The method according to claim 5, **characterised in that** it consists of placing the second camera (31) over the bottom (7) of the receptacle, so that its viewing axis (32) forms, with the axis of symmetry (A₁) of the receptacle, an angle of inclination (β) of between 0 and 80° and, preferably, of the order of 30°

7. The method according to claim 5, **characterised in that** it consists of analysing the image formed by the video signal delivered by the second camera (31):
- by determining, on the image, a contour (E) which follows the internal profile of the resting plane of the receptacle and delimits, on one side, a first scanning zone (Z'₁) and, on the other side, a second scanning zone (Z'₂) in which appear the* markings of the resting plane of the receptacle,
- and by seeking, in the second scanning zone (Z'₂), in the event of absence of a light area in the first zone, the presence of a light area corresponding to a foreign body.

8. The method according to claim 7, **characterised in that** it consists of determining the area and/or the shape of the light area (I'₄) detected, and of comparing this with a threshold value, above which the light area is considered to be a foreign body.

9. The method according to claim 7, **characterised in that** it consists, for the search in the second scanning zone (Z'₂), of
- marking out the light areas (I'₆) corresponding to the* patterns of the resting plane,
- and to detect a light area (I'₄) other than that (I'₆) corresponding to the patterns of the placement plane, and of comparing these with threshold values of radial thickness and area, above which the light area is considered to be a foreign body.

10. A device for the detection, within a transparent or translucent receptacle (2) containing a liquid that is also transparent or translucent, of the presence of a foreign body (4) of greater density than that of the liquid, the device (1) including:
- means (3) to angle the receptacle in relation to the vertical, by an angle (α), in order to ensure the retention of the foreign body in an inspection area (5) forming part of the concave bottom moulding of the receptacle,
- at least one first light source (9) illuminating at least the inspection area (5),
- at least one first video camera (11) intended to recover the light transmitted by the receptacle,
- and a unit (12) for processing and analysis of the video signal delivered by the camera, in order to determine the presence or not of a foreign body,
**characterised in that**:
- the first light source (9) is placed along the body (6) of the bottle, on the side opposite to the containment zone,
- the first camera (11) is positioned over the bottom of the receptacle, with its viewing axis (A) tangential to the internal wall (7₁) of the bottom (7) of the receptacle prolonging the inspection area (5) of the concave bottom moulding, so as to recover the light transmitted after transmission by the receptacle,
- and a processing unit (12) is connected to the camera (11), in order to analyse the grey level of the video signal so as to detect the presence of a dark area corresponding to a foreign body.

11. The device according to claim 10, **characterised in that** the processing unit (12) includes:
- means to determine, on the image formed by the video signal, a line of separation (P) delimiting, on one side, a first inspection area (Z₁) and, on the other side, a second inspection area (Z₂), in which appear any markings borne by the concave bottom moulding of the receptacle,
- and means to search for a dark area (I₄) corresponding to a foreign body and, in the absence of a dark area in the first inspection area, to continue the search in the second inspection area.

12. The device according to claim 10, **characterised in that** it includes:
- a second light source (30) illuminating at least the inspection area,
- a second camera (31) designed to recover the light transmitted by reflection by the receptacle and coming from the second light source,
- and a processing circuit (33) connected to the second camera, in order to analyse the grey level of the video signal, so as to detect the presence of a light area (I'₄) corresponding to a foreign body.

13. The device according to claim 12, **characterised in that** the second camera (31) is placed over the bottom of the receptacle, in such a manner that its viewing axis (32) forms, with the axis of symmetry (A₁) of the receptacle, an angle of inclination (β) of between 0 and 80°, and preferably of the order of 30°.

14. The device according to claim 12, **characterised in that** the processing circuit (33) includes:
- means to determine, on the image formed by the video signal, a contour (E) following the internal profile of the placement plane of the receptacle and delimiting, on one side, a first scanning zone (Z'₁) and, on the other side, a second scanning zone (Z'₂), including the light areas corresponding to the patterns (I'₆) of the placement plane of the receptacle,
- and means to search for a light area (I'₆) firstly in the first scanning zone and, in the absence of any detected light area, then in the second scanning zone.

## Patentansprüche

1. Verfahren, um im Inneren eines durchsichtigen oder durchscheinenden Behälters (2), der eine ebenfalls durchscheinende oder durchsichtige Flüssigkeit enthält, das Vorhandensein eines Fremdkörpers (4) mit einer größeren Dichte als jener der Flüssigkeit zu erfassen, wobei das Verfahren darin besteht:
- den Behälter (2) in Bezug zur Vertikalen um einen Winkel (α) zu neigen, um die Eingrenzung des Fremdkörpers in einer Kontrollzone (5), die Teil der Bodennaht des Behälters ist, zu gewährleisten,
- wenigstens die Kontrollzone des Behälters mit Hilfe wenigstens einer Lichtquelle (9) zu beleuchten,
- mit einer ersten Kamera (11) das vom Behälter transmittierte Licht einzufangen,
- und das von der Kamera gelieferte Videosignal zu analysieren, um das Vorhandensein oder Nichtvorhandensein eines Fremdkörpers zu bestimmen,
**dadurch gekennzeichnet, daß** es darin besteht:
- das durch Transmission durch den Behälter transmittierte und von der Lichtquelle (9) kommende Licht mit der Kamera (11) einzufangen, deren Sichtachse (A) die Innenwand (7₁) des Bodens (7) des Behälters in Verlängerung der Kontrollzone (5) der Bodennaht tangiert,
- und wenigstens den Graupegel des Videosignals zu analysieren, um das Vorhandensein einer dunklen Zone (14), die einem Fremdkörper entspricht, zu erfassen.

2. Verfahren nach Anspruch 1, **dadurch gekennzeichnet, daß** es darin besteht, das vom Videosignal gebildete Bild zu analysieren:
- wobei auf dem Bild eine Trennlinie (P) definiert wird, die auf einer Seite eine erste Kontrollzone (Z₁) und auf der anderen Seite eine zweite Kontrollzone (Z₂) begrenzt, in der die möglichen von der Bodennaht des Behälters getragenen Kennzeichnungen aufscheinen,
- wobei in der ersten Kontrollzone (Z₁) eine dunkle Zone (I₄) gesucht wird, die einem Fremdkörper entspricht,
- und wobei in der zweiten Kontrollzone (Z₂) im Falle des Fehlens einer dunklen Zone in der ersten Zone das Vorhandensein einer dunklen Zone entsprechend einem Fremdkörper gesucht wird.

3. Verfahren nach Anspruch 2, **dadurch gekennzeichnet, daß** es darin besteht, für die Suche in der zweiten Kontrollzone (Z₂):
- auf dem Bild das Profil (F) des Bodens des Behälters zu bestimmen,
- und zu bestimmen, ob die erfaßte dunkle Zone (I₄) das Profil des Bodens berührt oder nicht, um das Vorhandensein eines Fremdkörpers bzw. einer Kennzeichnung zu erkennen.

4. Verfahren nach Anspruch 2 oder 3, **dadurch gekennzeichnet, daß** es darin besteht, die Fläche und/oder die Form der dunklen Zone (I₄) zu bestimmen und sie mit einem Schwellenwert zu vergleichen, über den hinaus die dunkle Zone (I₄) als einem Fremdkörper entsprechend betrachtet wird.

5. Verfahren nach einem der Ansprüche 1 bis 4, **dadurch gekennzeichnet, daß** es darin besteht:
- wenigstens die Kontrollzone (5) des Behälters zu beleuchten, um es einer zweiten Kamera (31) zu ermöglichen, das durch Reflexion durch den ersten Behälter transmittierte Licht einzufangen,
- und wenigstens den Graupegel des von der zweiten Kamera (31) gelieferten Videosignals zu analysieren, um das Vorhandensein einer hellen Zone (I'₄), die einem Fremdkörper entspricht, zu erfassen.

6. Verfahren nach Anspruch 5, **dadurch gekennzeichnet, daß** es darin besteht, die zweite Kamera (31) unter dem Boden (7) des Behälters anzuordnen, so daß ihre Sichtachse (32) mit der Symmetrieachse (A₁) des Behälters einen Neigungswinkel (β) zwischen 0 und 80°, vorzugsweise von ungefähr 30°, bildet.

7. Verfahren nach Anspruch 5, **dadurch gekennzeichnet, daß** es darin besteht, das vom von der zweiten Kamera (31) gelieferten Videosignal gebildete Bild zu analysieren:
- wobei auf dem Bild eine Kontur (E) definiert wird, die dem inneren Profil der Aufstellebene des Behälters folgt und auf einer Seite eine erste Prüfzone (Z'₁) und auf der anderen Seite eine zweite Prüfzone (Z'₂) begrenzt, in der die Kennzeichnungen der Aufstellebene des Behälters aufscheinen,
- und wobei in der zweiten Prüfzone (Z'₂) im Falle des Fehlens einer hellen Zone in der ersten Zone nach dem Vorhandensein einer hellen Zone gesucht wird, die einem Fremdkörper entspricht.

8. Verfahren nach Anspruch 7, **dadurch gekennzeichnet, daß** es darin besteht, die Fläche und/oder die Form der erfaßten hellen Zone (I'₄) zu bestimmen und sie mit einem Schwellenwert zu vergleichen, über den hinaus die helle Zone als einem Fremdkörper entsprechend angesehen wird.

9. Verfahren nach Anspruch 7, **dadurch gekennzeichnet, daß** es für die Suche in der zweiten Prüfzone (Z'₂) darin besteht:
- die hellen Zonen (I'₆) zu suchen, die den Motiven der Aufstellebene entsprechen,
- und eine andere helle Zone (I'₄) als jene (I'₆), die den Motiven der Aufstellebene entsprechen, zu suchen und sie mit Schwellenwerten einer radialen Dicke und einer Fläche zu vergleichen, über die hinaus die helle Zone als einem Fremdkörper entsprechend angesehen wird.

10. Vorrichtung, um im Inneren eines durchsichtigen oder durchscheinenden Behälters (2), der eine ebenfalls durchscheinende oder durchsichtige Flüssigkeit enthält, das Vorhandenseins eines Fremdkörpers (4) mit einer größeren Dichte als jener der Flüssigkeit zu erfassen, wobei die Vorrichtung (1) umfaßt:
- Mittel (3), um den Behälter zur Vertikalen um einen Winkel (α) zu neigen, um die Eingrenzung des Fremdkörpers in einer Kontrollzone (5), die Teil der Bodennaht des Behälters ist, zu gewährleisten,
- wenigstens eine erste Lichtquelle (9), die wenigstens die Kontrollzone (5) beleuchtet,
- wenigstens eine erste Videokamera (11), die dazu bestimmt ist, das vom Behälter transmittierte Licht einzufangen,
und eine Einheit zur Bearbeitung und Analyse (12) des von der Kamera gelieferten Videosignals, um das Vorhandensein oder Nichtvorhandensein eines Fremdkörpers zu bestimmen,
**dadurch gekennzeichnet, daß**:
- die erste Lichtquelle (9) entlang des Körpers (6) der Flasche auf der der Eingrenzungszone gegenüber liegenden Seite angeordnet ist,
- die erste Kamera (11) unter dem Boden des Behälters angeordnet ist und ihre Sichtachse (A) die Innenwand (7₁) des Bodens (7) des Behälters in der Verlängerung der Kontrollzone (5) der Bodennaht tangiert, um das durch Transmission durch den Behälter transmittierte Licht einzufangen,
- und eine Verarbeitungseinheit (12) mit der Kamera (11) verbunden ist, um den Graupegel des Videosignals zu analysieren, um das Vorhandensein einer dunklen Zone, die einem Fremdkörper entspricht, zu erfassen.

11. Vorrichtung nach Anspruch 10, **dadurch gekennzeichnet, daß** die Verarbeitungseinheit (12) umfaßt:
- Mittel, um auf dem vom Videosignal gebildeten Bild eine Trennlinie (P) zu definieren, die auf einer Seite einer erste Kontrollzone (Z₁) und auf der anderen Seite eine zweite Kontrollzone (Z₂) begrenzt, in der die möglichen von der Bodennaht des Behälters getragenen Kennzeichnungen aufscheinen,
- und Mittel, um eine dunkle Zone (I₄) zu suchen, die einem Fremdköper entspricht, und bei Nichtvorhandensein einer dunklen Zone in der ersten Kontrollzone die Suche in der zweiten Kontrollzone fortzusetzen.

12. Vorrichtung nach Anspruch 10, **dadurch gekennzeichnet, daß** sie umfaßt:
- eine zweite Lichtquelle (30), die wenigstens die Kontrollzone beleuchtet,
- eine zweite Kamera (31), die dazu ausgeführt ist, das durch die Reflexion durch den Behälter und von der zweiten Lichtquelle ausgegangene Licht einzufangen,
- und eine Bearbeitungsschaltung (33), die mit der zweiten Kamera verbunden ist, um den Graupegel des Videosignals zu analysieren, um das Vorhandensein einer hellen Zone (I'₄), die einem Fremdkörper entspricht, zu erfassen.

13. Vorrichtung nach Anspruch 12, **dadurch gekennzeichnet, daß** die zweite Kamera (31) unter dem Boden des Behälters angeordnet ist, so daß ihre Sichtachse (32) mit der Symmetrieachse (A₁) des Behälters einen Neigungswinkel (β) zwischen 0 und 80° und vorzugsweise von ungefähr 30° bildet.

14. Vorrichtung nach Anspruch 12, **dadurch gekennzeichnet, daß** die Bearbeitungsschaltung (33) umfaßt:
- Mittel, um auf dem vom Videosignal gebildeten Bild eine Kontur (E) entlang des Innenprofils der Aufstellebene des Behälters zu bilden, die auf einer Seite eine erste Prüfzone (Z'₁) und auf der anderen Seite eine zweite Prüfzone (Z'₂) begrenzt, einschließlich der hellen Zonen, die den Motiven (I'₆) der Aufstellebene des Behälters entsprechen,
- und Mittel zum Suchen einer hellen Zone (I'₆) zuerst in der ersten Prüfzone und bei Fehlen einer erfaßten hellen Zone in der zweiten Prüfzone.
